# EUROPÄISCHE PATENTANMELDUNG

(11) **EP 1 046 479 A1**
(43) Veröffentlichungstag der Anmeldung: **25.10.2000**
(21) Anmeldenummer: 99810336.0
(22) Anmeldetag: 22.04.1999
(51) Int. Cl.: B26F 1/24

(54) **Vorrichtung zum Lochen und Verformen eines Flächengebildes.**

(71) Anmelder: Christoph Burckhardt AG, 4019 Basel (CH)
(72) Erfinder: Burckhardt, Christoph, 4144 Arlesheim (CH); Plüss, Markus, 4102 Binningen (CH); Jöhl, Bruno, 5022 Rombach (CH); Ulmer, Christoph, 4054 Basel (CH); Wisson, Francis, 68300 St. Louis (FR)
(74) Vertreter: Bollhalder, Renato

(57) **Zusammenfassung**

Eine erfindungsgemässe Vorrichtung umfasst eine Nadelwalze (1) und eine Lochwalze (2), zwischen denen ein Flächengebilde (3) loch- und verformbar ist. Die Nadelwalze (1) weist eine Vielzahl von Nadeln (11) auf, während die Lochwalze (2) mit einer Vielzahl von Löchern (21) zur Aufnahme von Nadeln (11) der Nadelwalze (1) versehen ist. Die Nadelwalze (1) und die Lochwalze (2) sind so ausgebildet und angeordnet, dass während des Lochens und Verformens jede Nadel (11) im Loch- und Verformbereich in ein Loch (21) der Lochwalze (2) eintaucht. Das dazwischenliegende Flächengebilde (3) wird auf diese Weise nicht nur perforiert, sondern die Lochränder im Flächengebilde (3) werden zwischen den Nadeln (11) und den Lochrändern der Lochwalze (2) auch in einer kontrollierten Weise dreidimensional geformt.

## Beschreibung

Die vorliegende Erfindung bezieht sich auf eine Vorrichtung mit einem eine Vielzahl von Nadeln aufweisenden Nadelelement und einem Gegenelement, zwischen denen ein Flächengebilde loch- und verformbar ist.

Unter einem solchen Flächengebilde wird hier einerseits ein flächiges, biegbares Gut verstanden, wie beispielsweise eine Kunststofffolie, z.B. aus Polyäthylen, ein Blatt Papier oder Vliesstoff, der auch einige Milimeter dick sein kann. Anderseits sind damit auch starre Platten gemeint. Perforierte Kunststofffolien, bei denen die Lochränder eine bestimmte dreidimensionale Form aufweisen, werden etwa zur Herstellung von Babywindeln verwendet. Bis anhin ist es aber nicht gelungen, in einem Schritt die Kunststofffolien zu lochen und den Lochrändern die gewünschte Form zu geben.

Es ist bekannt, Kunststofffolien durch Durchführen zwischen einer eine Vielzahl von Nadeln aufweisenden Nadelwalze und einer Gegenwalze mit einer glatten Oberfläche zu lochen. Die dabei entstehenden Lochränder weisen aber keine regelmässige dreidimensionale Form auf, da die glatte Oberfläche der Gegenwalze dem Ausstülpen von Lochrändern entgegenwirkt.

Anstelle von Gegenwalzen mit glatter Oberfläche wurden daher auch schon Gegenwalzen eingesetzt, die mit in Walzenrotationsrichtung durchgehenden Rillen versehen sind, in die die Nadeln der Nadelwalze während des Lochens eintauchen können. In den Kunststofffolien entstehen dann Löcher mit teilweise dreidimensionalen Lochrändern, die aber für gewisse Anwendungen keine ideale und insbesondere keine genau definierte Form haben.

Angesichts der Nachteile der bisher bekannten, oben beschriebenen Vorrichtungen liegt der Erfindung die folgende Aufgabe zugrunde. Zu schaffen ist eine Vorrichtung zum Lochen und Verformen eines Flächengebildes der eingangs erwähnten Art, mit der beim Lochen des Flächengebildes die Lochränder kontrolliert dreidimensional geformt werden.

Diese Aufgabe wird durch die erfindungsgemässe Vorrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht darin, dass bei einer Vorrichtung mit einem eine Vielzahl von Nadeln aufweisenden Nadelelement und einem Gegenelement, zwischen denen ein Flächengebilde loch- und verformbar ist, das Gegenelement eine Vielzahl von Löchern zur Aufnahme von Nadeln des Nadelelements aufweist, so dass während des Lochens und Verformens jede Nadel im Loch- und Verformbereich in ein Loch des Gegenelements eintaucht.

Dadurch, dass jede Nadel des Nadelelements im Loch- und Verformbereich in ein Loch des Gegenelements eintaucht, wird das dazwischenliegende Flächengebilde nicht nur perforiert, sondern die Lochränder im Flächengebilde werden zwischen den Nadeln und den Lochrändern des Gegenelements auch in einer kontrollierten Weise dreidimensional geformt. Das Flächengebilde wird so mit Löchern mit regelmässigen, relativ genau geformten Lochrändern versehen.

Je nach Flächengebilde, beispielsweise bei Kunststofffolien, erfolgt das Lochen und Verformen bei erhöhter Temperatur, wobei bei den heute gebräuchlichen Folien zum Teil Temperaturen bis ca. 450°C verwendet werden. Beim Erhitzen des Nadelelements und des Gegenelements dehnen sich diese aufgrund Ihrer normalerweise unterschiedlichen Beschaffenheit unterschiedlich stark, was berücksichtigt werden muss, damit bei der erhöhten Temperatur die Nadeln in die Löcher passen. Bei einer Vorrichtung zum Lochen und Verformen eines Flächengebildes bei erhöhter Temperatur sind das Nadelelement und das Gegenelement daher derart ausgebildet und gelagert, dass nach deren Erhitzen auf die zum Lochen und Verformen des Flächengebildes benötigte Temperatur während des Lochens und Verformens jede Nadel im Loch- und Verformbereich in ein Loch des Gegenelements eintaucht. Im kalten Stadium brauchen das Nadelelement und das Gegenelement nicht aufeinander zu passen.

Im folgenden wird die erfindungsgemässe Vorrichtung unter Bezugnahme auf die beigefügten Zeichnungen anhand zweier Ausführungsbeispiele detaillierter beschrieben. Es zeigen:
- Fig. 1 -: eine Perspektivansicht eines ersten Ausführungsbeispiels der erfindungsgemässen Vorrichtung mit einer Nadelwalze und einer Lochwalze während des Lochens und Verformens eines Flächengebildes;
- Fig. 2 -: eine schematische Darstellung des Lochens und Verformens des Flächengebildes mit der Vorrichtung von Fig. 1;
- Fig. 3 -: eine stark vergrösserte, teilweise schematische, ausschnittsweise Schnittansicht der Nadelwalze und der Lochwalze während des Lochens und Verformens des Flächengebildes;
- Fig. 4 -: einen Teil des gelochten und verformten Flächengebildes in einer geschnittenen Perspektivansicht; und
- Fig. 5 -: eine geschnittene Perspektivansicht eines zweiten Ausführungsbeispiels der erfindungsgemässen Vorrichtung mit einer Nadelplatte und einer Lochplatte.

### Figuren 1 und 2

Das dargestellte erste Ausführungsbeispiel einer erfindungsgemässen Vorrichtung zum Lochen und Verformen eines Flächengebildes 3 umfasst im wesentlichen eine Nadelwalze 1 mit einer Vielzahl von regelmässig angeordneten Nadeln 11 und eine Lochwalze 2 mit einer Vielzahl von regelmässig angeordneten Löchern 21, derart, dass während des Lochens und Verformens jede Nadel 11 im Loch- und Verformbereich in ein Loch 21 der Lochwalze 2 eintaucht. Die Nadelwalze 1 und die Lochwalze 2 sind an einem Gestell 4 rotierbar gelagert, wobei die Nadelwalze 1 über zwei Verstellräder 5 höhenverstellbar ist, so dass die Tiefe des Eindringens der Nadeln 11 in die Löcher 21 einstellbar ist. Ein Elektromotor 6 dient zum synchronen Antreiben der Nadelwalze 1 und der Lochwalze 2.

Das Flächengebilde 3 wird vorzugsweise von einer vorhergehenden Station einer Fertigungsstrasse her kommend über eine Umlenkrolle 7 zwischen der Nadelwalze 1 und der Lochwalze 2 hindurch über die Lochwalze 2 geführt und nachher einer nächsten Station zugeführt. Es ist über die Lochwalze 2 gespannt, was ein genaues Perforieren ermöglicht, und schliesst im vorliegenden Beispiel beidseits der Lochwalze 2 mit der Horizontalen einen Winkel α ein.

Nadelwalzen 1 und Lochwalzen 2 können je nach Einsatzgebiet verschiedene Grössen aufweisen und mit unterschiedlichen Anzahlen von Nadeln 11 bzw. Löchern 21 versehen sein. Verwendet werden beispielsweise Walzen 1, 2 mit einer Breite von ca. 3,2 m mit ungefähr 100'000 Nadeln 11 bzw. Löchern 21.

Bei gewissen Flächengebilden 3, insbesondere bei Kunststofffolien, erfolgt das Lochen und Verformen bei erhöhter Temperatur, z.B. durch eine beheizte Nadelwalze 1, wobei bei den heute gebräuchlichen Folien zum Teil Temperaturen bis ca. 450°C verwendet werden. Die unterschiedliche Dehnung der Nadelwalze 1 und der Lochwalze 2 aufgrund Ihrer normalerweise unterschiedlichen Beschaffenheit muss in diesem Fall bei der Ausbildung und Anordnung der Walzen 1, 2 berücksichtigt werden, damit bei der erhöhten Temperatur die Nadeln 11 in die Löcher 21 passen. Ein Walzenpaar 1, 2 ist somit im Normalfall für bestimmte Temperaturbereiche ausgelegt.

### Figur 3

Es ist hier ersichtlich, dass die Nadelwalze 1 einen Zylinderkörper 12 umfasst, in dem die Nadeln 11 verankert, beispielsweise eingegossen, sind. Der Zylinderkörper 12 ist vorzugsweise aus Metall, z.B. aus Messing oder Stahl, während die Nadeln 11 vorzugsweise aus gehärtetem Stahl bestehen. Die Lochwalze 2 ist mit Vorteil ganz oder zumindest in ihren äusseren Bereichen aus Gummi oder Metall, worin Löcher 21 ausgebildet sind, die sich bis fast ganz nach unten von ihrer Mündung her zum Innern der Lochwalze 2 hin konisch verjüngen. Die Nadeln 11 verjüngen sich etwa ab der Nadelmitte zur Spitze hin ebenfalls konisch und in diesem Bereich ist ihre Umfangsfläche ungefähr parallel zur Innenfläche des jeweiligen Lochs 21, in das sie während des Lochens und Verformens eingeführt sind.

Zum Lochen und Verformen des Flächengebildes 3 wird dieses in Pfeilrichtung zwischen der Nadelwalze 1 und der Lochwalze 2 durchgeführt, während die beiden Walzen 1, 2 in Pfeilrichtung rotieren. Die Nadeln 11 perforieren dabei das Flächengebilde 3 und formen die Ränder der entstehenden Löcher 31 zwischen den ungefähr parallelen Bereichen der Nadeln 11 und der Löcher 21 der Lochwalze 2 in einer kontrollierten Weise dreidimensional.

### Figur 4

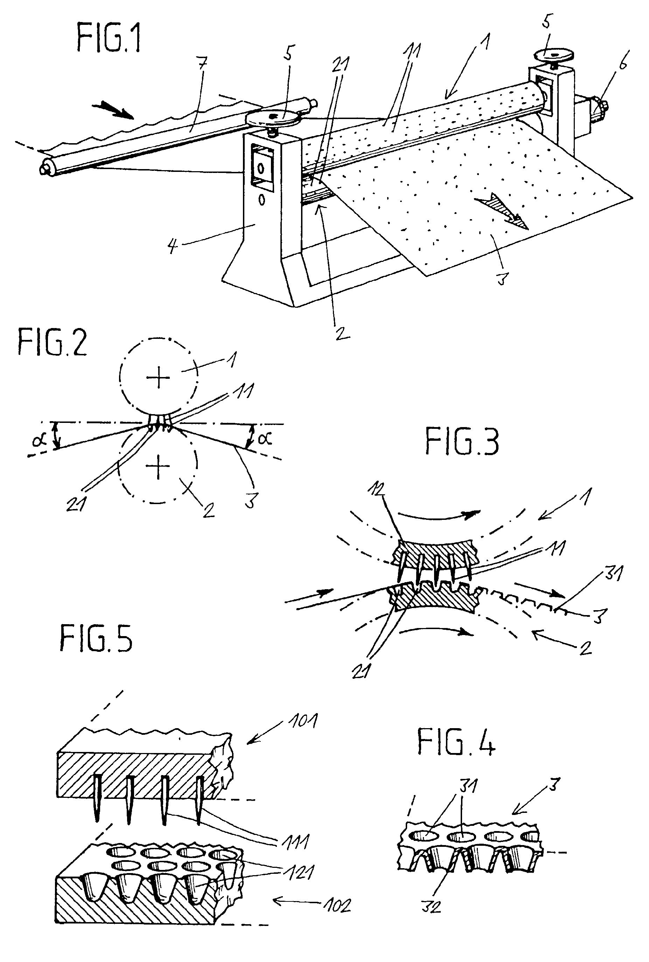

Durch das Lochen und Verformen eines ebenen Flächengebildes 3 mittels der erfindungsgemässen Vorrichtung der Fig. 1 bis 3 erhält man das dargestellte gelochte und verformte Flächengebilde 3, das gleichmässig verteilte Löcher 31 mit im Vergleich zum Stand der Technik regelmässiger geformten konischen Lochrändern 32 aufweist.

### Figur 5

Das gelochte und verformte Flächengebilde 3 von Fig. 4 kann auch mittels des dargestellten zweiten Ausführungsbeispiels der erfindungsgemässen Vorrichtung hergestellt werden. Bei diesem Ausführungsbeispiel sind anstelle einer Nadelwalze 1 eine Nadelplatte 101 mit Nadeln 111 und anstelle einer Lochwalze 2 eine Lochplatte 102 mit Löchern 121 vorhanden. Das Lochen und Verformen des Flächengebildes 3 erfolgt nicht kontinuierlich, sondern abschnittsweise. Ansonsten gilt das im Zusammenhang mit dem ersten Ausführungsbeispiel Gesagte.

Zu den vorbeschriebenen Vorrichtungen zum Lochen und Verformen eines Flächengebildes sind weitere konstruktive Variationen realisierbar. Hier ausdrücklich erwähnt seien noch:
- Anstatt regelmässig angeordnete Nadeln 11 bzw. 111 und Löcher 21 bzw. 121 können die Nadelwalze 1 bzw. Nadelplatte 101 und die Lochwalze 2 bzw. Lochplatte 102 auch unregelmässig angeordnete Nadeln und Löcher aufweisen.
- Die ungefähr parallelen Bereichen der Nadeln 11 bzw. 111 und der Löcher 21 bzw. 121 der Lochwalze 2 bzw. der Lochplatte 102 müssen sich nicht unbedingt konisch verjüngen. Es sind auch andere Formen, wie z.B. eine Zylinderform, möglich.
- Anstatt Walzenpaare 1, 2 bzw. Plattenpaare 101, 102 für bestimmte Temperaturbereiche auszulegen, wäre es prinzipiell auch denkbar, diese durch geeignete Materialwahl so auszubilden, dass sie sich bei einer Temperaturerhöhung gleichermassen dehnen und so in allen relevanten Temperaturbereichen verwendbar sind.
- Zum Aufhängen und Bewegen der Nadelwalze 1 und Lochwalze 2 bzw. Nadelplatte 101 und Lochplatte 102 sind viele unterschiedliche Varianten denkbar. Wichtig ist vor allem, dass ihre gegenseitige Ausrichtung während des Lochens und Verformens stimmt.

## Patentansprüche

1. Vorrichtung mit einem eine Vielzahl von Nadeln (11; 111) aufweisenden Nadelelement (1; 101) und einem Gegenelement (2; 102), zwischen denen ein Flächengebilde (3) loch- und verformbar ist, dadurch gekennzeichnet, dass das Gegenelement (2; 102) eine Vielzahl von Löchern (21; 121) zur Aufnahme von Nadeln (11; 111) des Nadelelements (1; 101) aufweist, so dass während des Lochens und Verformens jede Nadel (11; 111) im Loch- und Verformbereich in ein Loch (21; 121) des Gegenelements (2; 102) eintaucht.

2. Vorrichtung nach Anspruch 1, dadurch gekennzeichnet, dass das Nadelelement (1; 101) und das Gegenelement (2; 102) derart ausgebildet und gelagert sind, dass nach deren Erhitzen auf die zum Lochen und Verformen des Flächengebildes (3) benötigte Temperatur während des Lochens und Verformens jede Nadel (11; 111) im Loch- und Verformbereich in ein Loch (21; 121) des Gegenelements (2; 102) eintaucht.

3. Vorrichtung nach Anspruch 1 oder 2, dadurch gekennzeichnet, dass das Nadelelement (1; 101) und das Gegenelement (2; 102) mindestens eine Nadel (11; 111) bzw. ein Loch (21; 121) pro 10 cm² aufweisen.

4. Vorrichtung nach einem der Ansprüche 1 bis 3, dadurch gekennzeichnet, dass die Löcher (21; 121) sich zumindest bis zu einer gewissen Tiefe von ihrer Mündung her zum Innern des Gegenelements (2; 102) hin zumindest annähernd konisch verjüngen.

5. Vorrichtung nach einem der Ansprüche 1 bis 4, dadurch gekennzeichnet, das jede Nadel (11; 111) einen Bereich aufweist, in dem ihre Umfangsfläche ungefähr parallel zur Innenfläche des jeweiligen Lochs (21; 121) ist, in das sie während des Lochens und Verformens eingeführt ist.

6. Vorrichtung nach einem der Ansprüche 1 bis 5, dadurch gekennzeichnet, dass die Tiefe des Eindringens der Nadeln (11; 111) in die Löcher (21; 121) einstellbar ist.

7. Vorrichtung nach einem der Ansprüche 1 bis 6, dadurch gekennzeichnet, dass das Gegenelement (2; 102) aus Gummi oder Metall und das Nadelelement (1; 101) aus Metall ist, wobei die Nadeln (11; 111) vorzugsweise aus gehärtetem Stahl sind.

8. Vorrichtung nach einem der Ansprüche 1 bis 7, dadurch gekennzeichnet, dass das Nadelelement eine Nadelwalze (1) und das Gegenelement eine Lochwalze (2) ist.

9. Vorrichtung nach Anspruch 8, dadurch gekennzeichnet, dass sie Mittel zum synchronisierten Rotieren der Nadelwalze (1) und der Lochwalze (2) aufweist.

10. Vorrichtung nach einem der Ansprüche 1 bis 7, dadurch gekennzeichnet, dass das Nadelelement eine Nadelplatte (101) und das Gegenelement eine Lochplatte (102) ist.
